Europäisches Patentamt

European Patent Office

Office européen des brevets

(11) Numéro de publication : **0 050 087**
**B1**

# (12) FASCICULE DE BREVET EUROPÉEN

(45) Date de publication du fascicule du brevet :
08.07.87

(51) Int. Cl.⁴ : **A 01 D 46/28**

(21) Numéro de dépôt : **81420145.5**

(22) Date de dépôt : **09.10.81**

(54) **Machine à vendanger.**

(30) Priorité : **10.10.80 FR 8022094**

(43) Date de publication de la demande :
**21.04.82 Bulletin 82/16**

(45) Mention de la délivrance du brevet :
**08.07.87 Bulletin 87/28**

(84) Etats contractants désignés :
**AT BE CH DE IT LI**

(56) Documents cités :
**EP-A- 0 010 203**
**FR-A- 2 313 859**
**US-A- 3 703 072**

(73) Titulaire : **Corneloup, Alain**
**Le Sitre**
**Theize Rhône (FR)**

**Corneloup, Dominique**
**Rue Mirwart**
**Le Bois d'Oingt Rhône (FR)**

(72) Inventeur : **Arnaud, Claude Benoit**
**"Le Ruissel"**
**Theize F-69620 Le Bois D'Oingt (FR)**

(74) Mandataire : **Maureau, Philippe**
**Cabinet Germain & Maureau Le Britannia - Tour C 20,**
**bld Eugène Déruelle**
**F-69432 Lyon Cédex 03 (FR)**

## Description

La présente invention a pour objet une machine à vendanger.

La plupart des machines à vendanger réalisent le secouage latéral des pieds de vigne, à l'aide de fléaux montés sur un châssis enjambeur, comme cela est décrit dans le brevet US 3 703 072 et la demande de brevet français 2 313 859. Les fléaux présentent, néanmoins, l'inconvénient de détériorer la vendange en raison de leur action en coup de fouet, tout en n'étant pas d'une parfaite efficacité car, compte tenu de leur longueur et de leur souplesse, le secouage qu'ils procurent est amorti et, par suite, imparfait.

La demande de brevet européen 0 010 203 décrit un appareil pour le ramassage de fruits comprenant deux secoueurs horizontaux et parallèles aptes à enserrer le pied de l'arbre fruitier dont les fruits sont à récolter. Ces secoueurs sont chacun montés pivotant autour d'un axe vertical, et sont animés d'un mouvement d'oscillation de part et d'autre du plan médian longitudinal de l'appareil, au cours duquel ils demeurent parallèles. Ces secoueurs, de forte section, délimitent une entrée en V à leur extrémité avant assurant un guidage du pied de l'arbre jusqu'à une zone où les secoueurs sont parallèles. Toutefois, cet appareil n'est pas adapté à la récolte de vendange du fait que la rigidité des secoueurs peut se traduire par une dégradation des pieds de vigne, notamment si ceux-ci sont palissés. En outre, le fait que les secoueurs ne comportent pas de retour à leur extrémité postérieure, risque de produire une dégradation du pied de vigne, lorsque celui-ci échappe au secoueur.

La présente invention vise à remédier à ces inconvénients en fournissant une machine à vendanger qui, tout en étant de conception simple, est extrêmement performante.

Cette machine est du type comprenant des batteurs disposés horizontalement et agencés par paire, chaque batteur présentant, de l'avant vers l'arrière, une partie inclinée de l'extérieur vers l'intérieur de la machine, puis une partie sensiblement parallèle au plan médian longitudinal de la machine, les deux batteurs d'une même paire étant agencés pour pivoter autour d'axes verticaux de part et d'autre du plan médian longitudinal de la machine, tout en demeurant parallèles l'un à l'autre.

Selon l'invention, cette machine comprend au moins deux supports desdits batteurs, de longueur au moins égale à la longueur des batteurs, disposés parallèlement l'un à l'autre de part et d'autre du plan médian longitudinal de la machine, et le mouvement de pivotement des batteurs autour d'axes verticaux est réalisé par un mouvement oscillant de ces supports de part et d'autre de leur position intermédiaire dans laquelle ils sont parallèles au plan médian longitudinal de la machine, par pivotement de chacun sur le châssis de la machine autour d'un axe vertical situé à proximité de l'une de ses extrémités, chaque support portant une série desdits batteurs constitués de tiges parallèles disposées dans différents plans décalés en hauteur les uns par rapport aux autres, chaque tige étant fixée à ses deux extrémités sur son support, et comportant, à cet effet, outre les deux parties précédemment indiquées, une partie postérieure sensiblement perpendiculaire au plan médian longitudinal de la machine.

Au cours du mouvement d'avance de la machine, à cheval sur un rang de vigne, chaque pied s'engage, successivement entre les deux séries de batteurs, préalablement au secouage, l'introduction du pied entre les batteurs étant facilitée du fait de l'ouverture en V tournée vers l'avant que forment les deux séries de batteurs.

Le mouvement d'oscillation latérale des deux séries de batteurs provoque un secouage efficace du pied de vigne. Il faut noter que la vendange n'est pas détériorée du fait qu'il n'y a pas de coups de fouet, comme dans le cas des machines à fléaux, et que l'action de la machine est très efficace du fait de la tenue de chaque tige formant batteur à ses deux extrémités.

Selon une forme d'exécution de l'invention, la tige constitutive de chaque batteur est métallique et réalisée à partir de corde à piano.

Selon une caractéristique de l'invention, la largeur de chaque batteur, c'est-à-dire la distance dont, par sa partie parallèle au plan médian longitudinal de la machine, il fait saillie de son support en direction du centre de la machine, correspond sensiblement à la moitié de la distance entre les deux supports.

Il est ainsi réalisé un bon pincement des pieds de vigne entre les batteurs de deux séries en vis-à-vis.

En outre, chaque batteur inférieur d'une série n'est fixé qu'à son extrémité avant et est monté autour d'un axe horizontal et disposé dans le sens longitudinal de la machine, avec possibilité de pivotement du batteur autour de cet axe, vers le bas et rappel à l'horizontale par un contrepoids.

La partie inférieure des pieds de vigne étant irrégulière et de section plus importante que la partie supérieure, il convient d'éviter le blocage des batteurs à ce niveau.

A cet effet, la fixation de chaque batteur à sa seule extrémité avant facilite la déformation de celui-ci, lorsqu'il rencontre un obstacle, tandis que l'articulation permet son escamotage par pivotement vers le bas lorsqu'il rencontre un obstacle important.

Avantageusement, dans le cas où une machine comprend deux paires de séries de batteurs, les supports, correspondant à la paire disposée en avant, sont articulés au niveau de leur extrémité avant, tandis que les supports, correspondant à la paire située en arrière, sont articulés à proximité de leur extrémité postérieure.

Ceci permet de réaliser une machine très compacte. Les supports avant peuvent être parallèles aux supports arrières ou décalés angulairement par rapport à ceux-ci.

Selon une forme d'exécution de l'invention, le montage de chaque support de batteurs sur le châssis est réalisé par, outre l'articulation, l'intermédiaire d'un bras tubulaire suspendu librement sur la partie supérieure du châssis de la machine autour d'un axe horizontal et disposé dans le sens longitudinal de la machine, et contenant un arbre entraîné en rotation, en bout duquel est calé un plateau portant un maneton excentré, sur lequel est articulée une bielle dont l'autre extrémité est articulée autour d'un axe vertical sur le support de batteurs, à proximité de l'extrémité de celui-ci opposée à celle comportant l'axe d'articulation.

Ce montage libre des bras sur le châssis assure la mise automatique de ceux-ci en position verticale, le mouvement des biellettes correspondant à un pivotement des supports de part et d'autre d'un plan parallèle au plan médian longitudinal de la machine.

Avantageusement, chaque bras sur lequel est monté un support de batteurs porte, à son extrémité libre, une masse fixe, un ressort étant monté entre le châssis et le bras assurant le rappel de celui-ci en position verticale.

La combinaison de la masse fixée à l'extrémité de chaque bras et du ressort de rappel évite que, lors de l'appui sur les pieds de vigne, la force résultante provoque un déplacement du bras vers l'extérieur et non du support vers l'intérieur.

L'entraînement des bielles associées aux différents supports est assuré à partir d'un moteur unique d'arbre horizontal et longitudinal à la machine entraînant, par l'intermédiaire de chaînes, deux pignons dont chacun entraîne un arbre par l'intermédiaire d'un couple conique.

De toute façon, l'invention sera bien comprise à l'aide de la description qui suit, en référence au dessin schématique annexé représentant, à titre d'exemple non limitatif, une forme d'exécution de cette machine :

Figure 1   en est une vue de côté ;

Figure 2   en est une vue de dessus ;

Figure 3   en est une vue en coupe transversale selon la ligne 3-3 de figure 1 ;

Figure 4   est une vue en plan et à échelle agrandie d'un batteur.

La machine représentée au dessin comprend un châssis enjambeur 2 monté sur quatre roues 3 dont deux, correspondant à un même essieu, sont motrices. Sur le châssis 2 sont montés quatre supports 4 de batteurs 5, ces supports étant symétriques deux à deux par rapport à un plan médian longitudinal. Chaque support est monté sur la partie supérieure du châssis par l'intermédiaire d'un bras 6 pivotant librement sur le châssis autour d'un axe horizontal et longitudinal 7. Le bras 6 tubulaire sert au passage d'un arbre 8 entraîné à partir d'un moteur 9 par l'intermédiaire d'une chaîne 10 et d'un couple conique 12.

A l'extrémité inférieure de l'arbre 8 est calé un plateau 13 horizontal sur lequel est fixé un maneton excentré 14 sur lequel est articulée une bielle 15 dont l'autre extrémité est articulée sur un plateau 16 solidaire du support 4. La partie inférieure du bras 6 porte une masse 17, assurant le maintien du bras en position verticale sous l'effet de la gravité, ce maintien en position étant favorisé par l'action d'un ressort 18, fixé, d'une part, au bras 6 et, d'autre part, au châssis.

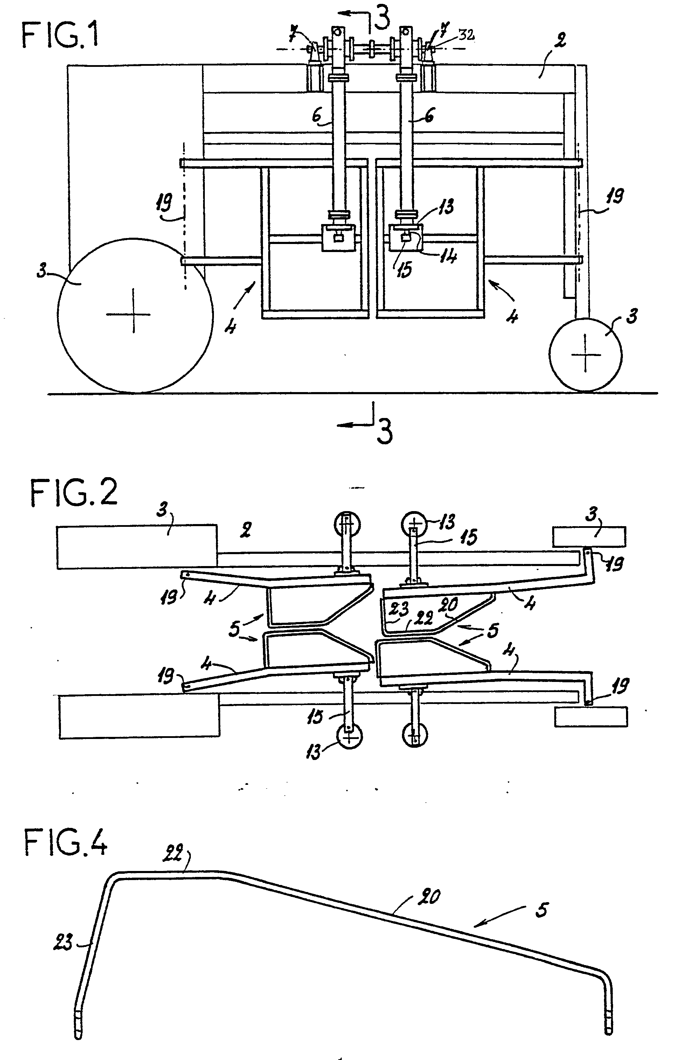

Comme montré notamment à la figure 1, chaque support 4 est réalisé à partir de profilés et articulé sur le châssis autour d'un axe vertical 19 situé à proximité de son extrémité opposée à celle sur laquelle est montée la bielle 15.

Comme il ressort de la figure 2, les supports 4, situés à l'avant de la machine, sont articulés au niveau de leur extrémité avant, tandis que les supports 4, situés à l'arrière de la machine, sont articulés autour de leur extrémité arrière.

Comme montré plus spécialement à la figure 4, chaque batteur 5 associé à un support 4 est constitué par une tige, telle qu'une corde à piano, dont les deux extrémités sont fixées au support 4. Chaque batteur 5 comprend de l'avant vers l'arrière une partie 20 inclinée de l'extérieur vers l'intérieur de la machine, une partie 22 sensiblement parallèle à l'axe longitudinal de la machine et une partie postérieure 23 sensiblement perpendiculaire à l'axe de la machine.

La distance entre la partie centrale 22 de chaque batteur et le support 4 est sensiblement égale à la moitié de la distance entre deux supports 4 en vis-à-vis.

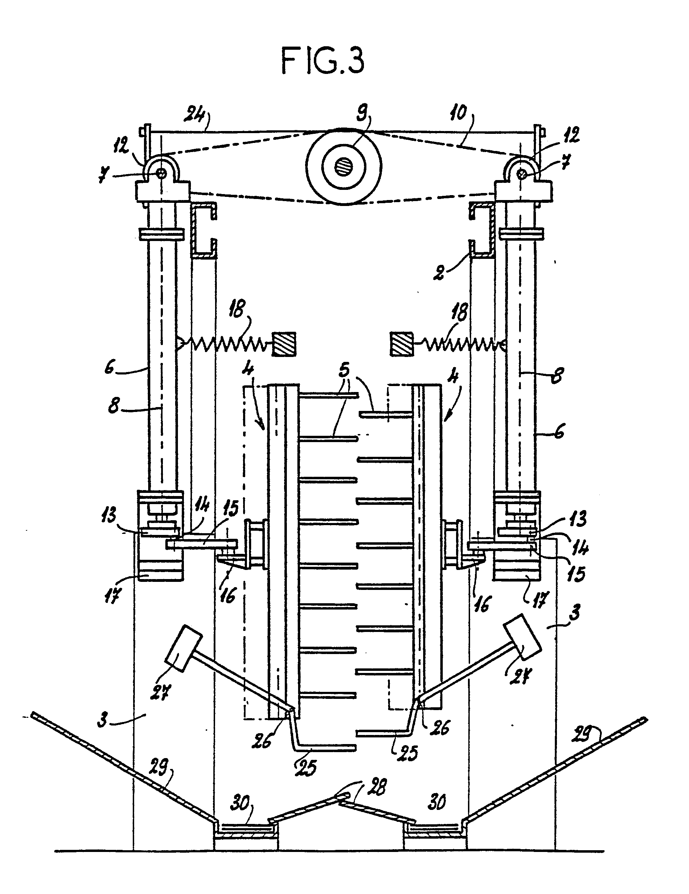

Comme montré à la figure 3, les batteurs 5, associés à deux supports 4 en vis-à-vis, sont décalés verticalement. Pour éviter tout risque de choc entre les batteurs de deux séries en regard, il est prévu un câble 24 reliant les prolongements supérieurs des bras 6 et évitant ainsi un rapprochement excessif des bras au niveau des batteurs.

Dans la forme d'exécution représentée au dessin, chaque série de batteurs comprend un batteur inférieur 25 de type particulier, qui n'est associé au support qu'au niveau de son extrémité avant. Le montage est réalisé avec possibilité de pivotement vers le bas autour d'un axe 26 horizontal et longitudinal, et retour en position horizontale sous l'action d'un contrepoids 27.

Comme montré au dessin, deux supports en regard demeurent parallèles, et sont animés d'un mouvement oscillant de part et d'autre d'une position intermédiaire. La figure 3 représente les supports et leurs batteurs dans une position extrême, l'autre position extrême des supports étant représentée en traits mixtes. Il est à noter que les supports appartenant à deux paires de supports différentes peuvent présenter un décalage angulaire, comme tel est le cas dans la solution représentée à la figure 2.

D'un point de vue pratique, lors de l'avance de la machine, les pieds de vigne sont enserrés entre les batteurs appartenant à deux supports situés en regard l'un de l'autre, le positionnement des pieds de vigne relativement aux batteurs étant facilité par la forme en V ouvert vers l'avant que déterminent les batteurs en regard.

Le mouvement d'oscillation latérale des supports par pivotement autour des axes 19 qui leur sont associés, permet la chute de la vendange qui est recueillie sur des écailles 28 et des jupes 29 de type connu, les amenant sur des transporteurs 30 assurant leur évacuation vers des bennes.

Comme montré au dessin, dans le cas d'une machine comprenant deux paires de supports de batteurs, il est réalisé un accouplement de l'entraînement en mouvement de deux supports situés d'un même côté, par l'intermédiaire d'un arbre 32 situé à la partie supérieure des bras 6.

### Revendications

1. Machine à vendanger, du type comprenant des batteurs (5) disposés horizontalement et agencés par paire, chaque batteur (5) présentant, de l'avant vers l'arrière, une partie (20) inclinée de l'extérieur vers l'intérieur de la machine, puis une partie (22) sensiblement parallèle au plan médian longitudinal de la machine, les deux batteurs d'une même paire étant agencés pour pivoter autour d'axes verticaux de part et d'autre du plan médian longitudinal de la machine, tout en demeurant parallèles l'un à l'autre, caractérisée en ce qu'elle comprend au moins deux supports (4) desdits batteurs (5), de longueur au moins égale à la longueur des batteurs, disposés parallèlement l'un à l'autre de part et d'autre du plan médian longitudinal de la machine, et en ce que le mouvement de pivotement des batteurs (5) autour d'axes verticaux est réalisé par un mouvement oscillant de ces supports (4) de part et d'autre de leur position intermédiaire dans laquelle ils sont parallèles au plan médian longitudinal de la machine, par pivotement de chacun sur le châssis de la machine autour d'un axe vertical (19) situé à proximité de l'une de ses extrémités, chaque support (4) portant une série desdits batteurs (5) constitués de tiges parallèles disposées dans différents plans décalés en hauteur les uns par rapport aux autres, chaque tige étant fixée à ses deux extrémités sur son support, et comportant, à cet effet, outre les deux parties (20, 22) précédemment indiquées, une partie (23) postérieure sensiblement perpendiculaire au plan médian longitudinal de la machine.

2. Machine selon la revendication 1, caractérisée en ce que la largeur de chaque batteur (5), c'est-à-dire la distance dont par sa partie (22) parallèle au plan médian longitudinal de la machine, il fait saillie de son support en direction du centre de la machine, correspond sensiblement à la moitié de la distance entre les deux supports (4).

3. Machine selon l'une quelconque des revendications 1 et 2, caractérisée en ce que chaque batteur inférieur (25) d'une série n'est fixé qu'à son extrémité avant et est monté autour d'un axe (26) horizontal et disposé dans le sens longitudinal de la machine avec possibilité de pivotement du batteur autour de cet axe vers le bas et rappel à l'horizontale par un contrepoids (27).

4. Machine selon l'une quelconque des revendications 1 à 3, caractérisée en ce que, dans le cas où elle comprend deux paires de supports (4), portant chacun une série de batteurs, un support avant et un support arrière sur chaque côté, les supports (4) correspondant à la paire disposée en avant, sont articulés au niveau de leur extrémité avant, tandis que les supports (4), correspondant à la paire située en arrière, sont articulés à proximité de leur extrémité postérieure.

5. Machine selon l'une quelconque des revendications 1 à 4, caractérisée en ce que le montage de chaque support (4) de batteurs (5) sur le châssis (2) est réalisé par, outre l'articulation (19), l'intermédiaire d'un bras tubulaire (6) suspendu librement sur la partie supérieure du châssis de la machine autour d'un axe (7) horizontal et disposé dans le sens longitudinal de la machine, et contenant un arbre (8) entraîné en rotation, en bout duquel est calé un plateau (13) portant un maneton (14) excentré, sur lequel est articulée une bielle (15) dont l'autre extrémité est articulée autour d'un axe vertical sur le support (4) de batteurs, à proximité de l'extrémité de celui-ci opposée à celle comportant l'axe d'articulation (19).

6. Machine selon la revendication 5, caractérisée en ce que chaque bras (6), sur lequel est monté un support (4) de batteurs, porte, à son extrémité libre, une masse fixe (17), un ressort (18) étant monté entre le châssis et le bras (6) assurant le rappel de celui-ci en position verticale.

7. Machine selon l'une quelconque des revendications 5 et 6, caractérisée en ce que l'entraînement des bielles (15) associées aux différents supports (4), est assuré à partir d'un moteur (9) unique d'arbre horizontal et longitudinal à la machine entraînant, par l'intermédiaire de chaînes (10), deux pignons dont chacun entraîne un arbre par l'intermédiaire d'un couple conique (12).

### Claims

1. Machine for harvesting grapes consisting of threshers (5) arranged horizontally and arranged in pairs, each thresher (5) presenting, from the front to the back, a part (20) inclined from the outside to the inside of the machine, then a part (22) substantially parallel to the longitudinal median plane of the machine, the two threshers of the same pair being arranged to pivot around vertical axis on either side of the longitudinal median plane of the machine, while remaining parallel to each other, characterised in that the pair consists of at least two supports (4) of the aforementioned threshers (5) in length at least equal to the length of the threshers, arranged parallel to each other on either side of the longitudinal median plane of the machine, and in such a way that the pivotal motion of the threshers (5) around the vertical axis is produced by an oscillating motion of these supports (4) on either side of the intermediary position in which they are parallel to the longitudinal median plane of the machine, by the pivoting of each one on the chassis of the machine around the vertical axis (19) situated near one of its ends, each support (4) bearing a set of the said threshers (5) comprising parallel shafts arranged at staggered levels relative to each other, each shaft being fastened at both ends on its support, and including, to that end, apart from the two parts (20, 22) previously indicated, a rear part (23) substantially perpendicular to the longitudinal median plane of the machine.

2. Machine according to Claim 1, characterised in that the width of each thresher (5), that is to say the distance from its part (22) parallel to the longitudinal median plane of the machine at which it projects from its support in the direction of the centre of the machine substantially corresponds to half the distance between the two supports (4).

3. Machine according to one or other of the Claims 1 and 2, characterised in that each lower thresher (25) of a series is only fastened at its front end and is mounted around a horizontal axis (26) and situated in the longitudinal direction of the machine with the possibility for the thresher to pivot around the axis towards the base and be returned to the horizontal by a counterweight (27).

4. Machine according to one or other of the Claims 1 to 3, characterised in that in the case where it consists of two pairs of supports (4) each carrying a series of threshers, one support in front and one support at the back at each side, the supports (4) linked to the pair arranged in front, are jointed at the level of their front end, while the supports (4) linked to the pair situated at the back, are jointed near their rear end.

5. Machine according to one or other of the Claims 1 to 4, characterised in that the mounting of each support (4) for the threshers (5) on the chassis (2) is achieved by, besides the joint (19), the agency of a tubular arm (6) freely suspended on the top part of the chassis of the machine around a horizontal axis (7) and arranged in the longitudinal direction of the machine, and containing a shaft (8) driven in rotation, in the end of which is mounted a flange (13) bearing an excentric crank pin (14), to which is joined a connecting rod (15) the other end of which is linked around a vertical axis on the support (4) for the threshers, near the end of the former opposite the latter connecting rod comprising the joint (19).

6. Machine according to Claim 5, characterised in that each arm (6), on which is mounted a support (4) for the threshers, bears, at its free end, a fixed mass (17), a spring (18) being mounted between the chassis and the arm (6) ensuring the return of the latter to a vertical position.

7. Machine according to one or other of the Claims 5 and 6, characterised in that the drive to the connecting rods (15) linked to the various supports is provided by a single motor (9) from a horizontal shaft and longitudinal to the machine driving, by means of chains (10) two gearwheels each of which drives a shaft by means of a conical coupling (12).

**Patentansprüche**

1. Maschine zum Ernten von Weintrauben mit horizontal angeordneten, paarweise einander zugeordneten Schlägern (5), die jeweils von vorne nach hinten einen von außen in Richtung auf das innere der Maschine geneigt verlaufenden Teil (20) sowie einen im wesentlichen paralell zur mittleren Längsachse der Maschine verlaufenden Teil (22) aufweisen, wobei die beiden Schläger desselben Paares um zu beiden Seiten der mittleren Längsebene der Maschine gelegene vertikale Achsen verschwenkbar sind und dabei ihre zueinander paralelle Ausrichtung beibehalten, dadurch gekennzeichnet, daß wenigstens zwei Träger (4) zur Halterung der genannten Schläger (5) vorgesehen sind, deren Länge zumindest ebenso groß ist wie die Länge der Schläger (5) und die paralell zueinander auf beiden Seiten der mittleren Längsebene der Maschine angeordnet sind, und daß die Schwenkbewegung der Schläger (5) um die vertikalen Achsen durch eine oszillierende Bewegung dieser Träger (4) nach beiden Seiten ihrer Mittelstellung, in der sie paralell zur mittleren Längsebene der Maschine verlaufen, hervorgerufen wird, wobei jeder an dem Gestell der Maschine um eine im Bereich eines seiner Enden gelegene vertikale Achse (19) verschwenkt wird, und daß jeder Träger (4) eine Reihe der genannten Schläger (5) trägt und diese Schläger (5) aus paralellen Stäben gebildet sind und in unterschiedlichen, gegeneinander höhenversetzten Ebenen angeordnet sind, wobei jeder dieser Stäbe mit seinen beiden Enden an dem zugehörigen Träger (4) befestigt ist, zu welchem Zweck er außer den beiden obengenannten Teilen (20, 22) einen hinteren Teil (24) aufweist, der annähernd senkrecht zur mittleren Längsebene der Maschine verläuft.

2. Maschine nach Anspruch 1, dadurch gekennzeichnet, daß die Breite jedes Schlägers (5), d. h. der Abstand, um welchen sein zur mittleren Längsebene der Maschine paralelle Teil (22) von dem zugeordneten Träger in Richtung auf das Zentrum der Maschine herausragt, annähernd dem halben Abstand zwischen den beiden Trägern (4) entspricht.

3. Maschine nach Anspruch 1 oder 2, dadurch gekennzeichnet, daß jeder untere Schläger (25) einer Reihe von Schlägern nur mit seinem vorderen Ende fixiert und um eine horizontale und in Längsrichtung der Maschine verlaufende Achse (26) montiert ist, und daß dieser Schläger (25) um diese Achse (26) nach unten verschwenkbar und durch ein Gegengewicht (27) in die horizontale Position zurückführbar ist.

4. Maschine nach einem der Ansprüche 1 bis 3, dadurch gekennzeichnet, daß bei Vorhandensein zweier Paare von jeweils eine Reihe von Schlägern tragenden Trägern (4), auf jeder Seite der Maschine ein vorderer und ein hinterer Träger angeordnet ist, und daß die das vordere Paar bildenden Träger (4) im Bereich ihrer vorderen Enden angelenkt sind, während die das hintere Paar bildenden Träger (4) im Bereich ihrer rückseitigen Enden angelenkt sind.

5. Maschine nach einem der Ansprüche 1 bis 4, dadurch gekennzeichnet, daß jeder der zur Halterung der Schläger (5) dienenden Träger (4) an dem Gestell (2) außer durch die Gelenkverbindung (19) mittels eines röhrenförmigen Arms (6) montiert ist, der an dem oberen Teil des Gestells der Maschine um eine horizontale und in Längsrichtung der Maschine verlaufende Achse (7) frei drehbar aufgehängt ist, und der eine mit einer Drehbewegung beaufschlagte Welle (8) enthält, an deren Ende eine Platte (13) aufgekeilt ist, die einen exzentrischen Zapfen (14) trägt, auf dem eine Pleuelstange (15) drehbar gelagert ist, deren anderes Ende um eine vertikale Achse an dem zugeordneten Träger (4) drehbar ist, die sich in der Nähe desjenigen Endes des Trägers (4) befindet, das dem die genannte Schwenkachse (19) umfassenden Ende entgegengesetzt ist.

6. Maschine nach Anspruch 5, dadurch gekennzeichnet, daß jeder Arm (6), an dem ein Träger (4) montiert ist, an seinem freien Ende eine feste Masse (17) trägt, und daß eine Feder (18) zwischen dem Gestell der Maschine und dem Arm (6) montiert ist, die die Rückführung des Arms in die vertikale Position gewährleistet.

7. Maschine nach einem der Ansprüche 5 und 6, dadurch gekennzeichnet, daß der Antrieb der den verschiedenen Trägern (4) zugeordneten pleuelstangen (15) durch einen einzigen Motor (9) mit horizontaler, in Längsrichtung der Maschine verlaufender Welle erfolgt, der über Ketten (10) zwei Zahnräder antreibt, deren jedes über ein Kegelräderpaar eine Welle antreibt.

FIG.1

FIG.2

FIG.4

# FIG.3